**Europäisches Patentamt**

**European Patent Office**

**Office européen des brevets**

(19)

(11) Veröffentlichungsnummer : **0 331 904 B1**

(12) **EUROPÄISCHE PATENTSCHRIFT**

(45) Veröffentlichungstag der Patentschrift :
**08.07.92 Patentblatt 92/28**

(51) Int. Cl.$^5$ : **G01N 1/14,** G01N 1/24

(21) Anmeldenummer : **89101860.8**

(22) Anmeldetag : **03.02.89**

(54) Verfahren und Einrichtung zum Entnehmen von Proben aus einem Schüttgutstrom.

(30) Priorität : **02.03.88 DE 3806677**

(43) Veröffentlichungstag der Anmeldung :
**13.09.89 Patentblatt 89/37**

(45) Bekanntmachung des Hinweises auf die
Patenterteilung :
**08.07.92 Patentblatt 92/28**

(84) Benannte Vertragsstaaten :
**DE ES GB GR SE**

(56) Entgegenhaltungen :
**DE-C- 3 616 218**
**US-A- 3 315 530**
**US-A- 3 843 198**
**PATENT ABSTRACTS OF JAPAN, Band 12, Nr.**
**388 (P-771)[3235], 17. Oktober 1988; & JP-A-63**
**131 051 (KANSAI COKE & CHEM.CO., LTD)**
**03-06-1988**

(73) Patentinhaber : **Rheinbraun**
**Aktiengesellschaft**
**Stüttgenweg 2**
**W-5000 Köln 41 (DE)**
Patentinhaber : **König, Reiner**
**Fliederweg 14**
**W-6236 Eschborn 2 (DE)**
Patentinhaber : **Sieglen, Rolf A.**
**Im Hohlweg 8a**
**W-6231 Sulzbach/Taunus (DE)**

(72) Erfinder : **Wolfrum, Erhard, Dipl.-Chem. Dr. rer.**
**nat.**
**W-5160 Düren (DE)**
Erfinder : **Faber, Wolfgang, Dipl.-Chem. Dr. rer.**
**nat.**
**W-5014 Kerpen (DE)**
Erfinder : **König, Reiner, Dipl.-Phys.**
**Fliederweg 14**
**W-6236 Eschborn (DE)**
Erfinder : **Sieglen, Rolf A., Dipl.-Ing.**
**Im Hohlweg 8a**
**W-6231 Sulzbach (DE)**

(74) Vertreter : **Koepsell, Helmut, Dipl.-Ing.**
**Mittelstrasse 7**
**W-5000 Köln 1 (DE)**

EP 0 331 904 B1

## Beschreibung

Die Erfindung betrifft ein Verfahren und eine Einrichtung zum Entnehmen von Proben aus einem Schüttgutstrom, insbesondere aus einem Schüttgutstrom, der zumindest überwiegend aus Kohle oder Braunkohle besteht, zur anschließenden Bestimmung von repräsentativen chemischen und/oder physikalischen Kenngrößen des beprobten Materials, wobei die Probe in Form eines Gemisches aus feinen und gröberen Staubpartikeln in der Nähe der Wurfparabel, jedoch außerhalb des Schüttgutstromes abgesaugt wird, welche Wurfparabel sich einstellt, wenn der Schüttgutstrom von einem abgebenden Förderband auf ein anderes, aufnehmendes Förderband übergeben wird, und die zur Durchführung einer repräsentativen Analyse notwendige Kornfraktion aus dem abgesaugten Gemisch abgetrennt wird.

Verfahren und Einrichtung der vorbeschriebenen Art können benutzt werden, um beispielsweise den Wassergehalt und/oder den Aschegehalt von Kohle zu bestimmen. Es ist aber auch möglich, den Gehalt an anderen Substanzen zu bestimmen, die in dem den Schüttgutstrom bildenden Material vorhanden sind. Als Beispiele können der Schwefelgehalt von Kohle und der Phosphorgehalt von Eisenerzen genannt werden.

Aus der DE-PS 36 16 218 sind ein Verfahren und eine Einrichtung zum Feststellen des Wassergehaltes von Rohbraunkohle bekannt, wobei dem Schüttgutstrom Proben einer vorbestimmten Kornfraktion des Schüttgutes entnommen werden, deren durchschnittlicher Wassergehalt übereinstimmt mit dem durchschnittlichen Wassergehalt des von der Gesamtheit aller Kornfraktionen gebildeten Schüttgutes. Der Wassergehalt dieser vorbestimmten Kornfraktion wird zur Regelung des Trocknungsvorganges benutzt. Die Staubproben werden unter Verwendung einer Saugeinrichtung entnommen, die einen Vorfilter und einen Siebeinsatz aufweist.

Aus der DE-OS 29 07 513 ist ein Verfahren zum Sortieren von groben bis feinteiligen Materialien nach ihrer chemischen Zusammensetzung bekannt. Dabei wird beim chargenweisen Verladen von Erz Feinstaub gewonnen, der zur Feststellung des Phophorgehaltes des Erzes analysiert wird. Zur Gewinnung der für eine Probe erforderlichen Materialmenge kann ein Teil des Staubes abgesaugt werden, der beim Verladen des Erzes an der Verladestelle in der Luft schwebt. Es ist aber auch möglich, diese Staubmenge dadurch zu gewinnen, daß der Staub durch Druckluft oder durch mechanische Zerkleinerung erzeugt wird.

Bei beiden bekannten Verfahren ist zumindest ein Teil der für die Gewinnung der zu untersuchenden Kornfraktion erforderlichen Klassiereinrichtungen der Ansaugöffnung des Saugrohres zugeordnet. Dies hat den Nachteil, daß diese Einrichtungen einem erheblichen Verschleiß unterliegen, da es im Betrieb beispielsweise eines Bergwerks und bei den großen zu handhabenden Schüttgutströmen unvermeidbar ist, daß auch dann, wenn die Ansaugöffnung außerhalb des eigentlichen Schüttgutstromes positioniert ist, das Saugrohr insbesondere im Bereich der Ansaugöffnung von Bestandteilen des Schüttgutstromes getroffen wird, so daß Beschädigungen der Klassiereinrichtungen und somit Störungen im Betrieb der Gesamteinrichtung zwangsläufig auftreten.

Eine andere Schwierigkeit, die mit bekannten Verfahren verbunden sein kann, besteht darin, daß die Kornfraktion, die zur Bestimmung der repräsentativen chemischen und/oder physikalischen Kenngrößen benutzt wird, bezüglich ihrer Zusammensetzung für den Gesamt-Materialanteil, dem diese Kornfraktion entsprechen soll, nicht repräsentativ ist, wobei die mangelnde Übereinstimmung darauf zurückzuführen ist, daß bereits das Staubgemisch, welches zur Bildung der Probe(n) abgesaugt wurde, hinsichtlich seiner Zusammensetzung nicht der Zusammensetzung des Gesamtmaterials entspricht, welches den Anteil oder Abschnitt des Schüttgutstromes bildet, für den die Probe repräsentativ sein soll. Es gibt eine Reihe von Einflüssen, die dazu führen können, daß ein Staubgemisch abgesaugt wird, welches für die Gewinnung einer repräsentativen Probe ungeeignet ist. So kann durch Luftbewegungen ein Teil des Staubes, der sich bei der Übergabe des Schüttgutstromes von einem Förderband auf das andere ergibt, weggetragen werden. Dabei muß damit gerechnet werden, daß derartige Luftbewegungen, also beispielsweise Wind, nach Art eines Sichters wirken, also Staubpartikel mit einer bestimmten Korngröße wegtragen, wohingegen andere Staubpartikel, insbesondere solche mit einer gröberen Korngröße, im Bereich der Ansaugöffnung bleiben und somit in das Saugrohr gelangen. Da diese Luftbewegungen, insbesondere also Wind, mit wechselnden Stärken und Richtungen auftreten können, besteht die Gefahr, daß nicht nur bestimmte Korngrößen im abgesaugten Staubgemisch unterrepräsentiert sind, sondern darüber hinaus kann auch das Ausmaß der unerwünschten Änderungen der Zusammensetzung des abgesaugten Staubes sich beispielsweise in Abhängigkeit von der Windstärke ändern.

Eine andere Einflußgröße, die dazu führen kann, daß die abgesaugte Staubmenge für die Bildung einer repräsentativen Kornfraktion nicht geeignet ist, kann darin bestehen, daß bei Luftbewegungen von außen Material in den Bereich der Ansaugöffnung geweht bzw. getragen wird. Mit dieser Möglichkeit muß in allen Bergbaubetrieben gerechnet werden, da im allgemeinen nach kurzer Zeit das Material, also beispielsweise Braunkohle, das über die Förderbänder transportiert wird, in der gesamten Umgebung der Förderbänder beispielsweise das Liegende eines Tagebaus bedeckt, so daß schon bei leichten Luftbewegungensolche Braunkohle und ggf. andere Materialien, die mit dem jeweils auf den Förderbändern liegenden Schüttgutstrom nichts

EP 0 331 904 B1

zu tun haben oder eine andere Zusammensetzung aufweisen als dieser, in den Bereich der Ansaugöffnung getragen werden können. Auch dies führt zwangsläufig dazu, daß die abgetrennte Kornfraktion für den Schüttgutstrom nicht mehr repräsentativ ist.

Der Erfindung liegt die Aufgabe zugrunde, Verfahren und Einrichtung der einleitend beschriebenen Art so weiterzuentwickeln, daß selbst bei Vorliegen ungünstiger Umstände eine einwandfreie Probenahme gewährleistet ist derart, daß die aus dem abgesaugten Staubgemisch abgetrennte Kornfraktion, die zur Bestimmung der chemischen und/oder physikalischen Kenngrößen benutzt wird, repräsentativ ist für das gesamte Material, welches den Abschnitt des Schüttgutstromes bildet, dem die Probe entstammt. Insbesondere soll sichergestellt sein, daß sich äußere Einflüsse, die zu einer Verfälschung der Probe führen könnten, nicht oder nur in einem so geringen Maße auswirken, daß eine ins Gewicht fallende Abweichung der Kenngrößen der Probe von den entsprechenden Kenngrößen des Schüttgutstromes nicht zu befürchten ist.

Zur Lösung dieser Aufgabe schlägt die Erfindung vor, daß das Gemisch im Inneren eines die Wurfparabel aufnehmenden Übergabetrichters abgesaugt und aus dem Übergabetrichter über eine Rohrleitung nach außen geführt wird, um dort die zur Durchführung einer repräsentativen Analyse notwendige Kornfraktion aus dem Gemisch abzutrennen und diese Kornfraktion einer Einrichtung zur Bestimmung der repräsentativen chemischen und/oder physikalischen Größen zuzuführen.

Aufgrund der Tatsache, daß das Absaugen innerhalb des Übergabetrichters erfolgt, werden äußere Einflüsse nahezu vollständig eliminiert. Da der Schüttgutstrom von dem abgebenden Förderband auf ein tiefer liegendes, aufnehmendes Förderband fällt, tritt ohnehin eine starke Staubentwicklung auf, wobei jedoch im Gegensatz zu bekannten Verfahren dieser sich bildende Staub zunächst innerhalb des Übergabetrichters zusammengehalten wird, ohne daß durch Wind oder andere Einflüsse bestimmte Kornfraktionen des Staubes sofort nach dessen Entstehen weggetragen würden. Andererseits verhindern die den Trichter begrenzenden Wände, daß von außen Materialien in den Ansaugbereich getragen werden, die zu einem falschen Ergebnis führen könnten. Darüberhinaus findet durch das Herabfallen des Schüttgutstromes vom abgebenden Förderband auf das aufnehmende Förderband auch eine gewisse zusätzliche Durchmischung der den Schüttgutstrom bildenden Materialien statt, die ebenfalls dazu beiträgt, daß der sich innerhalb des Übergabetrichters bildende Staub in nahezu allen Bereichen innerhalb des Übergabetrichters alle Kornfraktionen enthält. Dies ist auch dann der Fall, wenn die Menge des transportierten Materials Schwankungen unterliegt. Solange der Schüttgutstrom nicht vollständig aufhört, wird die Staubbildung ausreichen, um Proben absaugen zu können.

Selbstverständlich ist es unvermeidbar, daß ein Teil des sich bildenden Staubes nach oben aus dem Übergabetrichter austritt und dort vom Wind weggetragen wird. Dies ist jedoch für das von der Erfindung angestrebte Ergebnis außer Belang, da das für die Bildung der zu untersuchenden Kornfraktion abgesaugte Staubgemisch innerhalb des Übergabetrichters, also in einem Bereich angesaugt wird, in welchem eine Entmischung durch Wind und andere Einflüsse noch nicht stattgefunden hat.

Bei Anwendung des Verfahrens gemäß der Erfindung ist es ohne weiteres möglich, das Gemisch kontinuierlich abzusaugen, wobei dann nach Abtrennen der für die Bestimmung der chemischen und/oder physikalischen Kenngrößen verwendeten Kornfraktion der aus der dieser Fraktion bestehende Materialstrom zur Bildung der einzelnen Proben aufzuteilen und gegebenenfalls vorhandenes Überschußmaterial zu entfernen ist. Es besteht jedoch auch die Möglichkeit, die Erfindung dann anzuwenden, wenn das Gemisch diskontinuierlich, vorzugsweise jedoch taktweise abgesaugt wird. Bei einer taktweisen Absaugung wird im allgemeinen so vorgegangen, daß in bestimmten Zeitabständen das Gemisch aus feinen und gröberen Staubpartikeln zur Bildung einer Probe abgesaugt wird, und zwar vorteilhaft mit gleichbleibender Dauer der einzelnen Absaugvorgänge.

Es liegt auf der Hand, daß normalerweise das Ergebnis desto genauer ist, je größer der beprobte Anteil des Schüttgutstromes ist, von dessen Material Proben abgesaugt worden sind. Aus diesem Grunde sollte bei nicht-kontinuierlichem Absaugen des Gemisches im allgemeinen das Absaugen während wenigstens der Hälfte der Förderzeit durchgeführt werden, so daß zumindest die Hälfte des Schüttgutstromes bei der Probenahme berücksichtigt wird.

Als besonders vorteilhaft hat sich eine Verfahrensweise herausgestellt, bei welcher das Gemisch unter Verwendung eines flexiblen und abrasiv-festen Schlauches in einem Bereich zwischen Wurfparabel und einer Begrenzungswand des Übergabetrichters angesaugt wird. Da in jedem Fall damit gerechnet werden muß, daß auch bei Anordnung außerhalb des herabfallenden Schüttgutstromes der die Ansaugöffnung aufweisende Endabschnitt des Saugrohres von einzelnen gröberen Materialteilen getroffen wird, erfährt ein Schlauch aufgrund seiner im allgemeinen elastischen Verformbarkeit eine geringere mechanische Beanspruchung. Außerdem kann der unvermeidbare Verschleiß zusätzlich noch dadurch reduziert werden, daß der Schlauch durch geeignete - z. B. Wahl von geeigneten Werkstoffen - verschleißfest gemacht wird.

Wo im einzeln die Ansaugöffnung des Saugrohres angeordnet wird, ist ohne Einfluß auf die Qualität des Ergebnisses, solange sich die Ansaugöffnung innerhalb des Übergabetrichters in einem Bereich desselben befindet, in welchem die vorgenannten Voraussetzungen - Fehlen von die Zusammensetzung des Probematerials in unzulässiger Weise verfälschenden Einflüssen - erfüllt sind. Im allgemeinen ist es vorteilhaft, die Ansaugeöffnung des Saugrohres oberhalb der Mitte der Quererstreckung des aufnehmenden Förderbandes anzuordnen, und zwar gegebenenfalls zwischen der Wurfparabel, also dem herabfallenden Förderstrom, und einer Begrenzungswand des Übergabetrichters. Darüber hinaus kann es zweckmäßig sein, die Seitenwandungen des normalerweise im Querschnitt rechteckigen Übergabetrichters mit ihren unteren Begrenzungen dicht oberhalb des aufnehmenden Förderbandes anzuordnen, wobei die untere Begrenzung der hinteren Begrenzungswand gegebenenfalls sogar an die Muldung des Förderbandes angepaßt sein kann. Die vordere Wandung des Übergabetrichters weist notwendigerweise einen größeren Abstand vom aufnehmenden Förderband auf, um so einen Durchgang für den auf dem Förderband liegenden und abzutransportierenden Schüttgutstrom freizulassen. Mithin kann die Möglichkeit nicht ausgeschlossen werden, daß ein Teil des innerhalb des Übergabetrichters aufgewirbelten Staubgemisches durch diese Öffnung nach außen abströmt, so daß es sich empfiehlt, die Ansaugöffnung des Saugschlauches in einem Bereich innerhalb des Übergabetrichters, beispielsweise zwischen Abwurfparabel und in Förderrichtung des aufnehmenden Förderbandes hinterer Begrenzungswand des Übergabetrichters anzuordnen. Jedoch sind auch gute Ergebnisse erzielbar, wenn die Ansaugöffnung im Bereich zwischen einer der seitlichen Begrenzungswandungen des Übergabetrichters und der Abwurfparabel angeordnet sind. Es sollte jedoch vermieden werden, die Ansaugöffnung des Saugschlauches im Bereich oder nahe der Durchtrittsöffnung anzuordnen, durch die der auf dem aufnehmenden Förderband liegende Schüttgutstrom aus dem Übergabetrichter heraus transportiert wird.

Bei laufenden Förderbändern werden insbesondere durch den auf das aufnehmende Band herabfallenden Förderstrom Erschütterungen auf das Gesamtsystem, also auch auf das Saugrohr, übertragen. Dies hat den Vorteil, daß Verstopfungen des Saugrohres nicht zu befürchten sind, da selbst bei Bildung von Agglomeraten diese sich im Saugrohr oder -schlauch nicht festsetzen können.

Dies gilt vor allem dann, wenn das Saugrohr durch eine Wandung des Übergabetrichters hindurchgeführt ist. Die Begrenzung der Durchbrechung in der Wandung für den Durchgang des Saugrohres sollte am Umfang des Saugrohres anliegen, um auch an dieser Stelle das Austreten von Staub aus dem Übergabetrichter zu vermeiden.

In der Zeichnung ist ein Ausführungsbeispiel der Erfindung im Schema dargestellt. Es zeigen

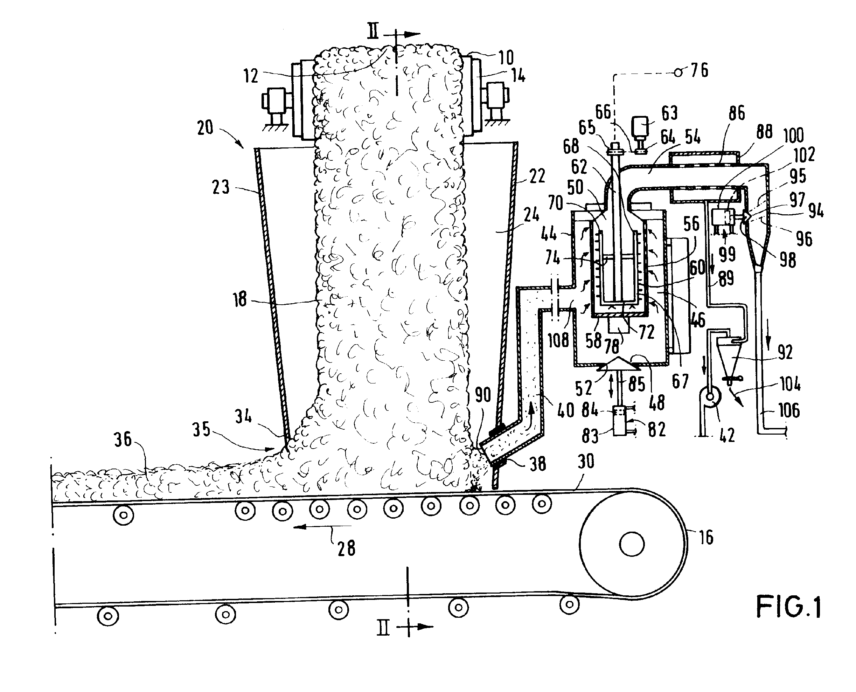

Fig. 1 die Seitenansicht eines Endes des aufnehmenden Förderbandes mit darüber angeordnetem Übergabetrichter sowie der Einrichtung zum Abtrennen der repräsentativen Kornfraktion,

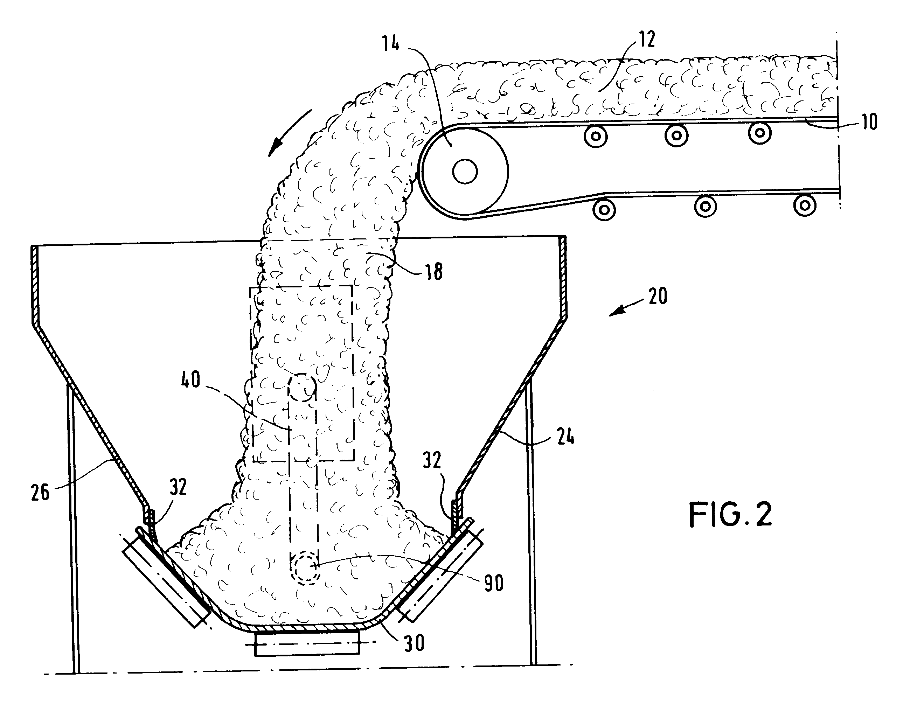

Fig. 2 die Ansicht in Richtung des Pfeiles II der Fig. 1.

Der auf dem abgebenden Förderband 10 ankommende Schüttgutstrom 12 wird an einer Umkehrtrommel 14 vom Förderband 10 abgeworfen und von einem zweiten Förderband 16 aufgenommen. Das abgebende Förderband 10 und das aufnehmende Förderband 16 sind bei dem in der Zeichnung dargestellten Ausführungsbeispiel im wesentlichen rechtwinklig zueinander verlaufend dargestellt. Die relative Lage der beiden Förderbänder ist jedoch für die Anwendung der Erfindung ohne Bedeutung.

Das vom abgebenden Förderband 10 abgeworfene Fördergut 12 überbrückt den Abstand zum aufnehmenden Förderband 16 in Form eines fallenden Förderstromes 18, der im wesentlichen parabelförmig verläuft. Unterhalb der Umkehr- oder Abwurftrommel 14 ist ein Übergabetrichter 20 angeordnet. Dieser Übergabetrichter weist vier Wandteile 22, 23, 24, 26 auf, die einen im wesentlichen rechteckigen, gegebenenfalls annähernd quadratischen Querschnitt begrenzen, der von unten nach oben zunimmt.

Die in Förderrichtung 28 des aufnehmenden Förderbandes 16 hintere Begrenzungswandung 22 und die beiden seitlichen Begrenzungswandungen 24 und 26 sind dabei so bemessen, daß sie unterseitig dicht oberhalb des Förderbandes 16 enden und somit kaum ein Durchgang zwischen dem oberen Trum 30 des das Fördergut aufnehmenden Förderbandes 16 und der jeweiligen unteren Begrenzung der genannten drei Wandungen vorhanden ist. Zusätzlich können im unteren Bereich der genannten Wandungen noch irgendwelche Abweiser oder dergleichen in Form von Streifen 32 aus gummielastischem Material vorhanden sein, die den Abstand zwischen jeweiliger unterer Begrenzung der drei Wände 22, 24 und 26 einerseits und dem Förderband 16 bzw. dessen Obertrum überbrücken und einen dort gegebenenfalls vorhandenen Spalt verschließen.

Lediglich die in Förderrichtung 28 des aufnehmenden Förderbandes 16 vordere Begrenzungswandung 23 des Übergabetrichters 20 endet in einem Abstand vom Obertrum 30 des aufnehmenden Förderbandes 16, so daß zwischen dem Obertrum 30 und der unteren Begrenzungskante 34 der Wandung 23 eine Öffnung 35 vorhanden ist, durch die das innerhalb des Übergabetrichters 20 auf dem Obertrum 30 des aufnehmenden Förderbandes 16 befindliche Fördergut in Förderrichtung 28 unter Bildung des auf dem Obertrum 30 befindlichen Schüttgutstromes 36 abtransportiert werden kann.

Bei dem in der Zeichnung dargestellten Ausführungsbeispiel ist die rückseitige Wandung 22 des Übergabetrichters 20 mit einer Durchbrechung 38 versehen, durch die ein flexibles Rohr oder ein Schlauch 40 derart in den unteren Bereich des Übergabetrichters 20 hineinragt, daß einerseits das freie Ende des Schlauches außerhalb des vom abgebenden Förderband 10 auf das aufnehmende Förderband 16 fallenden Förderstromes 18 bleibt, andererseits jedoch innerhalb des Übergabetrichters 20 angeordnet ist, so daß sich die Ansaugöffnung 90 dieses flexiblen Rohres oder Schlauches 40 innerhalb des Übergabetrichters zwischen dem fallenden Förderstrom 18 und der hinteren Begrenzungswandung 22 befindet, dabei jedoch so positioniert ist, daß kein Feststoff unter der Einwirkung lediglich der Schwerkraft in die Ansaugöffnung 90 hineinfallen kann.

Das flexible Rohr 40, dessen Durchmesser z. B. 100 mm betragen kann, ist in noch zu beschreibender Weise über Rohr- bzw. Schlauchleitungen mit einem Sauggebläse 42 verbunden, das einen Unterdruck erzeugt, der an der innerhalb des Übergabetrichters 20 befindlichen Ansaugöffnung des flexiblen Rohres oder Schlauches 40 anliegt.

Solange über das abgebende Förderband 10 Schüttgut zugefördert wird, befindet sich im gesamten Innenraum des Übergabetrichters 20 aufgewirbelter Staub, von dem ein Teil aufgrund des durch das Sauggebläse 42 erzeugten Unterdrucks durch die im Übergabetrichter 20 befindliche Ansaugöffnung 90 des flexiblen Rohres 40 angesaugt und durch letzteres hindurch in ein erstes Gehäuse 44 gelangt, dessen Innenraum 46 durch eine zylindrische Wandung begrenzt ist. Das Gehäuse 44 ist unterseitig und oberseitig mit jeweils einer im wesentlichen koaxial zum Gehäuse angeordneten Öffnung 48 bzw. 50 versehen, von denen die Öffnung 48 durch einen ventilähnlichen Körper 52 verschließbar ist. An die obere Öffnung 50 ist eine Rohrleitung 54 angeschlossen.

Innerhalb des Gehäuses 44 und koaxial zur Wandung von dessen Innenraum 46 ist ein ebenfalls zylindrisches Hohlsieb 56 angeordnet, das unterseitig durch einen Boden 58 verschlossen ist. Dieser Boden ist bei dem in der Zeichnung dargestellten Ausführungsbeispiel nicht als Siebgewebe, sondern als Platte oder Blech ausgebildet, die bzw. das keine Öffnungen aufweist. Es ist aber auch ohne weiteres möglich, den Boden 58 im Bedarfsfall als Sieb auszubilden. An seinem oberen Ende ist das Hohlsieb 56 offen.

Am Boden 58 des Hohlsiebes 56 ist ein Vibrator 78 angebracht. Die elektrischen Anschlußleitungen für die Zuführung von Energie zur Betätigung des Vibrators sind aus Gründen der Übersichtlichkeit nicht dargestellt. Ausgestaltung und Anordnung des Vibrators und der Verbindungsleitungen sind jedem Fachmann geläufig.

Der Verschlußkörper 52, durch den die im Boden des Gehäuses 44 befindliche Öffnung 48 verschlossen werden kann, ist mit einer Betätigungseinrichtung 82 verbunden, die aus einem in einem Zylinder 83 geführten Kolben 84 besteht. Durch entsprechende Beaufschlagung des Kolbens 84, der über eine Kolbenstange 85 mit dem Verschlußkörper 52 verbunden ist, kann letzterer aus seiner in der Zeichnung dargestellten Schließposition nach unten verschoben werden, so daß die Öffnung 48 frei wird und im Gehäuse 44 befindlicher Staub durch die Öffnung austreten kann.

Die an die oben im Gehäuse 44 befindliche Öffnung 50 anschließende Rohrleitung 54 ist mit einem zweiten, im wesentlichen ebenfalls zylindrisch ausgebildeten Hohlsieb 86 verbunden, welches innerhalb eines zweiten Gehäuses 88 angeordnet ist. Der Innenraum des Gehäuses 88 ist mit einer Leitung 89 verbunden, an deren anderem Ende das bereits erwähnte Sauggebläse 42 angeschlossen ist, welches über den Innenraum des Gehäuses 88 sowie die Leitungen 54 und 40 den für das Ansaugen des Materials erforderlichen Unterdruck an der Ansaugöffnung 90 der Leitung 40 verursacht. Zwischen Gehäuse 88 und Sauggebläse 42 ist eine Abscheideeinrichtung 92 in Form eines Zyklons eingeschaltet.

Das innerhalb des zweiten Gehäuses 88 angeordnete zweite Hohlsieb 86 setzt sich in eine Leitung 94 größeren Durchmessers fort, in welcher zwei Siebe 95, 96 angeordnet sind, die die Leitung 94 quer durchsetzen und dabei etwas geneigt in Richtung auf eine in der Wandung der Leitung 94 angebrachte Öffnung 97 verlaufen, die durch einen ventilähnlichen Körper 98 verschließbar ist, der durch eine Betätigungseinrichtung 99, die einen Zylinder 100 und einen darin geführten Kolben 102 aufweist, zwischen Offenposition und Schließposition bewegt werden kann.

Aufgrund der vorbeschriebenen Verfahrensweisen, Anordnungen und Ausgestaltungen ist sichergestellt, daß das durch die Leitung 40 angesaugte feinkörnige Material eine Kornfraktion bildet oder enthält, die repräsentativ ist für den Abschnitt des Förderstromes, dem dieses angesaugte Material entstammt. Aufgrund der Tatsache, daß die Ansaugöffnung 90 nach unten weist, kann kein Material in die Leitung 40 gelangen, welches nicht angesaugt worden ist. Soweit besteht auch durch entsprechende Einstellung des durch das Sauggebläse 42 erzeugten Unterdrucks und/oder durch entsprechende Wahl des Ansaugquerschnittes die Möglichkeit, den Korngrößenbereich zu bestimmen, der durch die Ansaugöffnung 90 der Leitung 40 angesaugt wird. Der Übergabetrichter 20 schirmt den Bereich, aus welchem das Material abgesaugt wird, gegen äußere Einflüsse ab, so daß äußere Einflüsse, die zu einer ins Gewicht fallenden Verfälschung des genommenen Probematerials führen könnten, nicht wirksam werden.

Das durch die Ansaugöffnung 90 angesaugte feinkörnige Material gelangt in das Gehäuse 44, in welchem es unter der Einwirkung des durch das Sauggebläse 42 erzeugten Unterdrucks gegen die äußere Siebfläche des zylindrischen Hohlsiebes 56 gedrückt wird. Die Körner, die kleiner sind als die Sieböffnungen, passieren die Siebfläche des Hohlsiebes 56 und gelangen von dessen Innenraum in die Leitung 54.

Die Körner, deren Durchmesser größer ist als die Öffnungen der Siebfläche des Hohlsiebes 56, fallen z. T. von der Außenfläche des Hohlsiebes 56 nach unten. Dabei wird es sich im wesentlichen um die gröberen Körner des Überkorns, also jenes Anteils des angesaugten Staubes, der das Hohlsieb 56 nicht passieren kann, handeln. Die feineren Körner des Überkorns werden zumindest zu einem Teil an der äußeren Siebfläche des Hohlsiebes 56 haften bleiben. Diese Körner können, um ein Zusetzen des Siebes zu vermeiden, dadurch entfernt werden, daß in bestimmten Zeitabständen der Vibrator 78 betätigt wird. Die durch ihn bewirkten Erschütterungen führen dazu, daß zumindest ein großer Teil des Überkorns vom Hohlsieb 56 abfällt. Gegebenenfalls kann zusätzlich die Siebfläche von innen mit einem Luftstrom beaufschlagt werden, der aus den Düsen des Rotors 60 austritt. Es werden im allgemeinen einige Drehbewegungen des Rotors 60 genügen, um diese Reinigung des Siebes zu bewirken. Dabei wird es zweckmäßig sein, während der Reinigung den durch das Sauggebläse 42 bewirkten Unterdruck zumindest zu verringern, obwohl dies nicht unbedingt erforderlich ist.

Das sich im unteren Bereich des Gehäuses 44 sammelnde Überkorn kann in bestimmten Zeitabständen durch die Öffnung 48 entfernt werden, wobei es zweckmäßig sein kann, das Betätigen des Rotors einerseits und das Entfernen des Überkorns durch die Öffnung 48 gleichzeitig durchzuführen und während dieser Zeit das Sauggebläse 42 abzustellen.

Der Zeitpunkt, zu welchem das Hohlsieb 56 zu reinigen ist, kann durch Messen des Unterdrucks in Strömungsrichtung der Luft hinter dem Hohlsieb 56 festgestellt werden. Ein Ansteigen des Unterdrucks zeigt an, daß das Hohlsieb 56 mehr oder weniger verstopft ist.

Es ist auch möglich, den Vibrator 78 im Dauerbetrieb zu benutzen, um den Durchgang des Unterkorns durch das Sieb und die eventuell an ihm haftende Schicht aus Staub zu unterstützen. Bei dieser Betriebsweise würde aber nur eine leichte Vibration erzeugt werden, damit das angesaugte Material an der Siebaußenfläche gehalten wird und die Vibration das Hindurchtreten des Unterkorns durch das Sieb beschleunigt.

Im Gehäuse 44 wird somit durch das erste Hohlsieb 56 ein Trennschnitt bewirkt, der die maximale Korngröße des in das zweite Hohlsieb 86 gelangenden feinkörnigen Feststoffes bestimmt. Unter der Einwirkung des durch das Sauggebläse 42 bewirkten Unterdrucks erfolgt hier die Entfernung der feinsten Kornfraktion, wobei der Trennschnitt durch die Größe der Öffnungen des Hohlsiebes 86 festgelegt ist. Das Staub-Luftgemisch, welches diese feinste Fraktion enthält, wird durch die Leitung 89 zunächst in den Zyklon 92 geführt, in welchem der Feststoff zumindest zum größten Teil abgeschieden wird, bevor die Luft das Sauggebläse 42 passiert. Der im Zyklon 92 abgeschiedene Feststoff wird über eine Leitung 104 aus dem Zyklon 92 ausgetragen.

In die an das zweite Hohlsieb 86 anschließende Leitung 94 gelangt somit eine Kornfraktion, die durch Entfernen einer Fraktion oberhalb einer bestimmten Korngröße und einer Fraktion unterhalb einer bestimmten Korngröße eine mittlere Fraktion darstellt, die repräsentativ ist für das Material des Förderstromes aus welchem diese mittlere Fraktion stammt. Es handelt sich also um die Kornfraktion, die in der DE-PS 36 16 218 als "Leitfraktion" bezeichnet ist.

Diese Leitfraktion ist vorher durch entsprechende Untersuchungen festzustellen, wobei dann auch die Größe der Öffnungen der Siebe entsprechend dem Körnungsbereich der Leitfraktion zu wählen ist. Aus der Leitung 94 gelangt diese für die Analyse vorgesehene Leitfraktion über die Verbindungsleitung 106 in die in der Zeichnung nicht dargestellte Analyseeinrichtung, die keinen Teil der Erfindung darstellt. Die in der Leitung 94 angeordneten Siebe 95 und 96 dienen dazu, Agglomerate, die sich während des Durchgangs durch die Leitung 54 und das Hohlsieb 86 gebildet haben, abzuscheiden. Es handelt sich dabei um eine Sicherheitsmaßnahme, die insbesondere verhindern soll, daß derartige Agglomerate bei der Handhabung des Probenmaterials in der Analyseeinrichtung zu Störungen führen. Zum Entfernen der Agglomerate wird der Ventilkörper 98 in größeren Zeitabständen in seine Offenlage verschoben. Das kann z. B. dann geschehen, wenn der der Öffnung 48 im ersten Gehäuse 44 zugeordnete Ventilkörper 52 sich in seiner Offenlage befindet.

Der Transport der Leitfraktion durch die Leitung 106 kann ebenfalls durch Unterdruck geschehen, wobei dieser dann so auf den durch das Sauggebläse 42 bewirkten Unterdruck abzustimmen ist, daß der Klassiervorgang am zweiten Hohlsieb 86 nicht gestört wird. Hierbei kann der Umstand ausgenutzt werden, daß die durch die Leitung 106 abgeförderten Partikel bei entsprechender Abstimmung der Unterdruckverhältnisse aufgrund ihrer größeren Masse durch die Saugwirkung des Sauggebläses 42 innerhalb des zweiten Gehäuses 38 nicht in Richtung auf die Leitung 89 umgelenkt werden.

**Patentansprüche**

1. Verfahren zur Entnahme von Proben aus einem Schüttgutstrom, insbesondere aus Kohle oder Braunkohle, zur anschließenden Bestimmung von repräsentativen chemischen und/oder physikalischen Kenngrößen des beprobten Materials, wobei die Probe in Form eines Gemisches aus feinen und gröberen Staubpartikeln in der Nähe der Wurfparabel, welche sich einstellt, wenn der Schüttgutstrom von einem abgebenden Förderband auf ein anderes, aufnehmendes Förderband übergeben wird, jedoch außerhalb des Schüttgutstromes, abgesaugt wird, und die zur Durchführung einer repräsentativen Analyse notwendige Kornfraktion aus dem abgesaugten Gemisch abgetrennt wird, dadurch gekennzeichnet, daß das Gemisch im Inneren eines die Wurfparabel aufnehmenden Übergabetrichters abgesaugt und aus dem Übergabetrichter über eine Rohrleitung nach außen geführt wird, um dort die zur Durchführung einer repräsentativen Analyse notwendige Kornfraktion aus dem Gemisch abzutrennen und diese Kornfraktion einer Einrichtung zum Bestimmen der repräsentativen chemischen und/oder physikalischen Kenngrößen zuzuführen.

2. Verfahren nach Anspruch 1, dadurch gekennzeichnet, daß das Gemisch kontinuierlich abgesaugt wird.

3. Verfahren nach Anspruch 1 dadurch gekennzeichnet, daß das Gemisch diskontinuierlich abgesaugt wird.

4. Verfahren nach Anspruch 1 dadurch gekennzeichnet, daß das Gemisch taktweise abgesaugt wird.

5. Verfahren nach Anspruch 3 oder 4, dadurch gekennzeichnet, daß das Absaugen des Gemisches während wenigstens der Hälfte der Förderzeit durchgeführt wird.

6. Verfahren nach Anspruch 1, dadurch gekennzeichnet, daß das Gemisch unter Verwendung eines flexiblen und abrasiv-festen Schlauches in einem Bereich zwischen Wurfparabel und einer Begrenzungswand des Übergabetrichters abgesaugt wird.

7. Einrichtung zum Entnehmen von Proben aus einem Schüttgutstrom, insbesondere aus Kohle oder Braunkohle, zur anschließenden Bestimmung von repräsentativen chemischen oder physikalischen Kenngrößen des beprobten Materials, mit einem Saugrohr (40), welches an eine Einrichtung (42) zum Erzeugen von Unterdruck angeschlossen werden kann, und mit einer Klassiervorrichtung (56, 86), in welcher aus dem abgesaugten Gemisch aus feinen und gröberen Staubpartikeln die zur Durchführung einer repräsentativen Analyse notwendige Kornfraktion aus dem Gemisch abgetrennt wird, wobei die Ansaugöffnung (90) des Saugrohres (40), durch welche das Gemisch angesaugt wird, in der Nähe der Wurfparabel, welche sich einstellt, wenn der Schüttgutstrom von einem abgebenden Förderband auf ein anderes, aufnehmendes Förderband übergeben wird, jedoch außerhalb des Schüttgutstromes, angeordnet ist, dadurch gekennzeichnet, daß die Ansaugöffnung (90) des Saugrohres (40) innerhalb eines Übergabetrichtes (20), innerhalb dessen der Schüttgutstrom (18) von einem abgebenden Förderband (10) auf das aufnehmende Förderband (16) übergeben wird, jedoch außerhalb des Schüttgutstromes (18) zwischen letzterem und der Wand (22, 23, 24, 26) des Übergabetrichters (20) angeordnet ist und die Klassiervorrichtung zum Abtrennen der für die Durchführung einer repräsentativen Analyse notwendigen Kornfraktion außerhalb des Übergabetrichters (20) angeordnet ist.

8. Einrichtung nach Anspruch 7, dadurch gekennzeichnet, daß das Saugrohr (40) als flexibler abrasivfester Schlauch ausgebildet ist.

9. Einrichtung nach Anspruch 7, dadurch gekennzeichnet, daß die Öffnung (90) des Saugrohres (40) oberhalb der Mitte der Quererstreckung des aufnehmenden Förderbandes (16) angeordnet ist.

10. Einrichtung nach Anspruch 7, dadurch gekennzeichnet, daß das Saugrohr (40) durch eine Wandung(22, 23, 24, 26) des Übergabetrichters(20) hindurch geführt ist.

11. Einrichtung nach Anspruch 10, dadurch gekennzeichnet, daß die Begrenzung der Durchbrechung (38) in der Wand (22) des Übergabetrichters (20) am Umfang des Saugrohres (40) anliegt.


## Claims

1. A method of taking samples from a flow of bulk material, in particular coal or brown coal, for subsequently determining representative chemical and/or physical characteristics of the sampled material, wherein the sample is sucked away in the form of a mix of line and coarser particles of dust in the vicinity of the parabolic trajectory which occurs when the flow of bulk material is transferred from a delivery conveyor belt on to another receiving conveyor belt, but outside the flow of bulk material, and the grain fraction required for carrying out a representative analysis operation is separated from the mix which has been sucked away, characterised in that the mix is sucked away in the interior of a transfer hopper receiving the parabolic trajectory and is carried outwardly from the transfer hopper by way of a conduit in order there to separate the grain fraction required for carrying out a representative analysis operation from the mix and to feed said grain fraction to a means for determining the representative chemical and/or physical characteristics.

2. A Method according to claim 1 characterised in that the mix is continuously sucked away.

3. A method according to claim 1 characterised in that mix is discontinuously sucked away.

4. A method according to claim 1 characterised in that the mix is cyclically sucked away.

5. A method according to claim 3 or claim 4 characterised in that the operation of sucking away the mix is carried out during at least half of the conveying time.

6. A method according to claim 1 characterised in thah the mix is sucked away using a flexible and abrasive-resistant tube in a region between the parabolic trajectory and a boundary wall of the transfer hopper.

7. Apparatus for taking samples from a flow of bulk material, in particular coal or brown coal, for subsequently determining representative chemical or physical characteristics of the sampled material, comprising a suction tube (40) which can be connected to a means for producing a reduced pressure, and a grading means (56, 86) in which the grain fraction from the mix which is required for carrying out a representative analysis operation is separated from the sucked-away mix comprising fine and coarser particles of dust, wherein the suction intake opening (90) of the suction tube (40) through which the mix is sucked in is arranged in the vicinity of the parabolic trajectory which occurs when the flow of bulk material is transferred from a delivering conveyor belt on to another receiving conveyor belt, but outside the flow of bulk material, characterised in that the suction intake opening (90) of the suction tube (40) is arranged within a transfer hopper (20), within which the flow of bulk material (18) is transferred from a delivering conveyor belt (10) on to the receiving conveyor belt (16), but outside the flow of bulk material (18) between the latter and the wall (22, 23, 24, 26) of the transfer hopper (20) and the grading means for separating off the grain fraction required for carrying out a representative analysis operation is arranged outside the transfer hopper (20).

8. Apparatus according to claim 7 characterised in that the suction tube (40) is in the form of a flexible abrasive-resistant tube.

9. Apparatus according to claim 7 characterised in that the opening (90) of the suction tube (40) is arranged above the middle of the transverse extent of the receiving conveyor belt (16).

10. Apparatus according to claim 7 characterised in that the suction tube (40) is passed through a wall (22, 23, 24, 26) of the transfer hoppe (20).

11. Apparatus according to claim 10 characterised in that the boundary of the aperture (38) in the wall (22) of the transfer hopper (20) bears against the periphery of the suction tube (40).

## Revendications

1. Procédé pour prélever des échantillons dans un courant de matière en vrac, en particulier de charbon ou de lignite, en vue de déterminer ensuite les caractéristiques représentatives d'ordre chimique et/ou physique de la matière ainsi étudiée, chaque échantillon étant prélevé par aspiration sous forme d'un mélange de particules pulvérulentes fines et grossières prises au voisinage de la trajectoire parabolique du courant de matière qui s'établit quand on fait passer ce courant d'une bande transporteuse d'arrivée à une autre bande transporteuse de reprise, ce prélèvement étant cependant effectué hors du courant de matière en vrac, et la fraction granulométrique nécessaire pour effectuer une analyse représentative étant séparée du mélange ainsi prélevé par aspiration, caractérisé en ce qu'on effectue ce prélèvement du mélange par aspiration à l'intérieur d'une trémie de transfert qui contient la trajectoire parabolique du courant de matière, et en ce qu'on envoie ce mélange hors de la trémie par une conduite tubulaire pour en séparer à l'extérieur de celle-ci la fraction granulométrique nécessaire pour effectuer une analyse représentative, afin d'amener cette fraction granulométrique à un appareil prévu pour en déterminer les caractéristiques représentatives d'ordre chimique et/ou physique.

2. Procédé selon la revendication 1, caractérisé en ce que le prélèvement du mélange par aspiration est effectué en régime continu.

3. Procédé selon la revendication 1, caractérisé en ce que le prélèvement du mélange par aspiration est effectué en régime discontinu.

4. Procédé selon la revendication 1, caractérisé en ce que le prélèvement du mélange par aspiration est effectué en régime cyclique.

5. Procédé selon l'une des revendications 3 ou 4, caractérisé en ce que le prélèvement du mélange par aspiration est effectué pendant au moins la moitié de la durée du transport de matière.

6. Procédé selon la revendication 1, caractérisé en ce que le prélèvement du mélange par aspiration est effectué au moyen d'un tuyau souple et à l'épreuve de l'abrasion, en opérant dans une zone située entre la trajectoire parabolique de la matière et une paroi de la trémie de transfert. trémie de transfert.

7. Dispositif pour prélever des échantillons dans un courant de matière en vrac, en particulier de charbon ou de lignite, en vue de déterminer ensuite les caractéristiques représentatives d'ordre chimique et/ou physique de la matière ainsi étudiée, ce dispositif comportant un tube d'aspiration (40) pouvant être raccordé à un appareil (42) qui produit une dépression, et un système de criblage (56,86), dans lequel on traite le mélange prélevé par aspiration qui est formé de particules fines et relativement grossières pour en séparer la fraction granulométrique nécessaire pour une analyse représentative, l'orifice d'entrée (90) du tube d'aspiration (40) par où s'effectue le prélèvement du mélange par aspiration étant disposé à proximité de la trajectoire parabolique de la matière qui s'établit lorsqu'on fait passer cette matière d'une bande transporteuse d'arrivée à une autre bande transporteuse de reprise, l'orifice d'entrée (90) étant cependant situé hors de la trajectoire parabolique de la matière, caractérisé en ce que l'orifice d'entrée (90) de la conduite d'aspiration (40) est disposé à l'intérieur d'une trémie de transfert (20) dans laquelle est reçu le courant de matière en vrac (18) provenant d'une bande transporteuse d'amenée (10) pour être transféré à la bande transporteuse de reprise (16), l'orifice d'entrée (90) étant toutefois situé en dehors du courant de matière en vrac (18) mais placé entre ce courant et la paroi (22,23,24,26) de la trémie de transfert (20), tandis que l'appareil de criblage prévu pour effectuer la séparation de la fraction granulométrique nécessaire pour une analyse représentative est disposé en dehors de la trémie de transfert (20).

8. Dispositif selon la revendication 7, caractérisé en ce que le tube d'aspiration (40) est constitué par un tuyau flexible résistant à l'abrasion.

9. Dispositif selon la revendication 7, caractérisé en ce que l'orifice d'entrée (90) du tube d'aspiration (40) est disposé au-dessus du milieu de l'étendue transversale de la bande transporteuse de reprise (16).

10. Dispositif selon la revendication 7, caractérisé en ce que le tube d'aspiration (40) passe à travers une paroi (22,23,24,26) de la trémie de transfert (20).

11. Dispositif selon la revendication 10, caractérisé en ce que le bord de l'échancrure de passage (38) ménagée dans la paroi (22) de la trémie de transfert (20) est en appui sur le pourtour du tube d'aspiration (40).

FIG.1

EP 0 331 904 B1

FIG.2

EP 0 331 904 B1